# EUROPEAN PATENT APPLICATION

(11) **EP 3 332 651 A1**
(43) Date of publication of application: **13.06.2018**
(21) Application number: 16202975.5
(22) Date of filing: 08.12.2016
(51) Int. Cl.: A23L 2/46, A23L 3/18, A23L 3/22

(54) **HEAT TREATING LIQUID FOOD WITH PARTICLES**

(71) Applicant: Tetra Laval Holdings & Finance S.A., 1009 Pully (CH)
(72) Inventor: Skoglund, Tomas, 22654 Lund (SE)
(74) Representative: Tetra Pak - Patent Attorneys SE

(57) **Abstract**

Heat treating of liquid food that comprises particles is disclosed. The liquid food is transferred (301) through a heat exchanger and through a holding cell. A heating media is transferred (303) through the heat exchanger such that heat is passed from the heating media to the liquid food, for heat treating the liquid food. A flowrate of the heating media is monitored (305) and the transfer of liquid food is discontinued (309) if (307) the flowrate of the heating media is below a predetermined flowrate value.

## Description

### Technical Field

The invention relates to heat treating liquid food that comprises particles, the heat treating taking place by transferring the liquid food through a heat exchanger and a holding cell.

### Background Art

Heat treatment of liquid food is typically performed in a processing system that comprises a heat exchanger and a holding cell. The liquid food is transferred through the heat exchanger and obtains heat from a heating medium whereby the temperature of the liquid food reaches a desired temperature. Having passed through the heat exchanger, the liquid food is held in the holding cell during a predetermined period of time for obtaining a desired heat treatment effect of the liquid food. The heat treatment effect provides killing or at least reduction of microorganisms in the liquid food and to an extent where the number of viable pathogens is so low that that they are unlikely to cause disease, as long as the liquid food is stored as prescribed and is consumed before its expiration date.

For liquid food in form of a fluid that comprises no particles, flowing through such a processing system, the turbulence that is experienced by the fluid will mix the fluid efficiently and it will obtain a homogeneous temperature. Such heat treatment is easy to control, not least because it is easy to obtain reliable measurements that are representative of the temperature of the fluid. However, this is not the case for other fluid substances such as liquid food that comprises particles, such as various kinds of soups, porridges and other more or less viscous food products that includes particles.

When heat treating liquid food with particles by using a process as summarized above, it is far from certain that the heat provided by the heating medium is enough to raise the temperature of the particles to the required level, and that the temperature is kept high for a time long enough to achieve desired heat treatment effect, for example pasteurization where target microorganisms are killed to a sufficient extent. The reason for this is that the particles, which may be in the form of food stuff such as peas and dices of various vegetables and meat, all have various mechanical and thermal properties such as density, heat conductivity and specific heat capacity that may differ significantly from the properties of the liquid that surrounds the particles.

The prior art has either not fully realized this problem or, in such case it has been recognized, provided solutions that essentially involve heating the liquid food to a higher than necessary temperature and/or held the liquid food for a longer time than necessary in the holding cell. Such solutions have drawbacks including degradation of the quality of the food and also unnecessary waste of energy.

### Summary

It is an object of the invention to at least partly overcome one or more of the above-identified limitations of the prior art related to controlling a process of heat treating liquid food that comprises particles. In particular, it is an object to provide for sufficient heat treatment of the particles in the liquid food.

Such an object is achieved as disclosed herein in a first aspect by a method for heat treating liquid food that comprises particles. The method comprises transferring the liquid food through a heat exchanger and through a holding cell. A heating media is transferred through the heat exchanger such that heat is passed from the heating media to the liquid food, for heat treating the liquid food. A flowrate of the heating media is monitored and the transfer of liquid food is discontinued if the flowrate of the heating media is below a predetermined flowrate value.

In other words, in such a method the flow rate of the heating media in the heat exchanger is controlled to a specific design value, i.e. the predetermined flowrate value, and this value can be seen as being supervised as a critical control point. Should the media flow rate drop below the predetermined value, then the production, i.e. the transfer of liquid food through the heat exchanger, is discontinued, e.g. by a simple shutdown operation or by diverting the liquid food such that it is not packed in consumer packages. An advantage of such a method is that it provides enhanced safety, which is beneficial when, e.g., obtaining official approval of heat treatment systems, while at the same time avoiding unnecessary quality degradation of the food and avoiding unnecessary use of energy. Herein, "heat treating" refers to killing or at least reducing any microorganism in liquid food, to an extent where the number of viable pathogens is so low that that they are unlikely to cause disease, as long as the liquid food is stored as prescribed and is consumed before its expiration date. Heat treating may also be referred to as pasteurization.

The predetermined flowrate value may be determined by the amount of heat needed to obtain heat treatment of any of the liquid food, the particles in the liquid food and center of the particles.

That is, by making sure that also the center, i.e. the core, of the particles in the liquid food are heat treated, it can be ascertained that the liquid food can be approved by any official/regulatory body.

For example, the amount of heat needed to obtain heat treating may be such that the liquid food is subjected to a thermal load F₀ that accomplishes killing of *Clostridium botulinum* spores, including examples where the center of the particles are subjected to a thermal load F₀ that accomplishes killing of *Clostridium botulinum* spores.

The object of the present disclosure is also achieved as disclosed herein in a second aspect by a system for heat treating liquid food comprising particles. The system comprises a heat exchanger, a holding cell and a control unit. The system is operable to transfer the liquid food through the heat exchanger and through the holding cell. The system is further operable to transfer a heating media through the heat exchanger for allowing heat to pass from the heating media to the liquid food, for heat treating the liquid food. Moreover, the system is operable to monitor a flowrate of the heating media and discontinue the transfer of liquid food if the flowrate of the heating media is below a predetermined flowrate value.

Such a system and embodiments of such a system, as described in more detail below, have technical effects and advantages that correspond to the technical effects and advantages of the method of the first aspect as summarized above. The system may include any feature described in connection the method, and vice versa.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematically illustrated block diagram of a system for heat treating liquid food,
Fig. 2a-d are graphs that illustrate flows, temperatures and thermal load in a system according to Fig. 1, and
Fig. 3 is a flowchart of a method for heat treating liquid food.

### Detailed Description

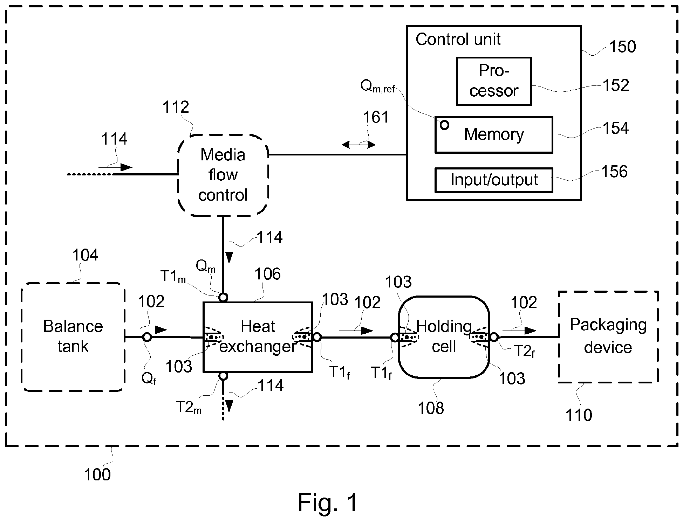

With reference to **Fig. 1** a system 100 for heat treating liquid food 102 comprising food particles 103 is illustrated. The system 100 comprises a heat exchanger 106, a holding cell 108 and a control unit 150. The system 100 may further comprise a balance tank 104, a packaging device 110 and a heating media flow control unit 112. The liquid food 102 may be soup, porridge or any other more or less viscous food product. The particles 103 are pieces of non-liquid food, such as peas, various types of grain, and dices or parts of various vegetables and meat.

The liquid food 102 comprising particles 103 may be provided from the balance tank 104. Heating media 114 may be provided in any appropriate manner known to the skilled person.

The system 100 is operable to transfer the liquid food 102 through the heat exchanger 106 and through the holding cell 108. The system 100 is further operable to transfer the heating media 114 through the heat exchanger 106, for allowing heat to pass from the heating media 114 to the liquid food 102, for heat treating the liquid food 102.

As will be described below, such a system 100 is operable in such a manner that it overcomes the drawbacks related to prior techniques for heat treating liquid food 102 comprising particles 103.

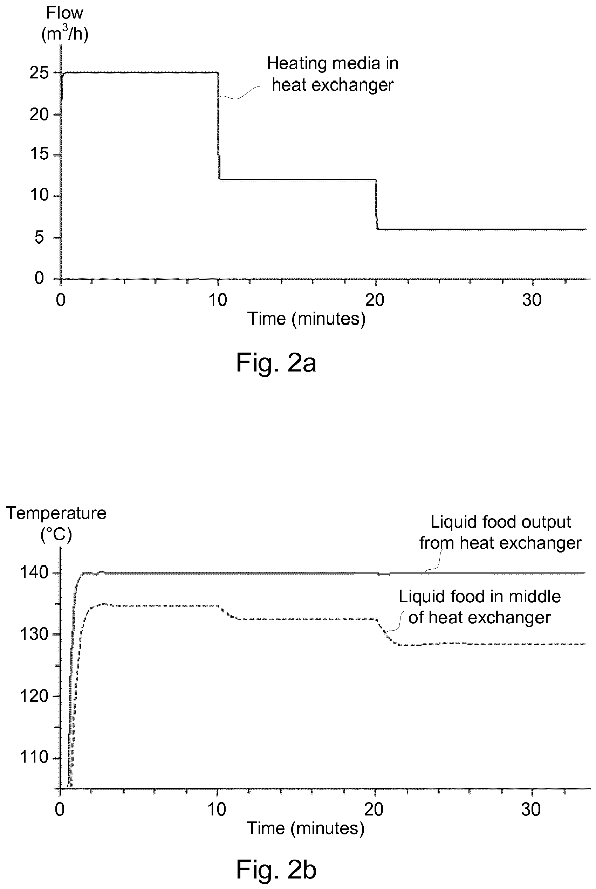

In order to illustrate this in detail, reference will be made to the graphs in Fig. 2a-d that illustrate measurements obtained from simulations, with continued reference also to Fig. 1. Tests have also been performed, verifying the measurements from the simulations.

The relationship between flowrates of the liquid food 102 and the heating media 114 of the heat exchanger 106 will affect the heating of the liquid food 102 and the particles 103 in the liquid food 102. That is, for a given flowrate of liquid food 102, the flowrate of the heating media 114 will affect the heating of the liquid food 102 and the particles 103, and thus affect the heat treatment of the liquid food 102 and its particles 103. A reason for this is that the temperature profile inside the heat exchanger 106 will vary.

For example, in the following a temperature of the heating media 114 out of the heat exchanger 106, i.e. temperature T2ₘ, is controlled to be 140°C (degrees Celsius) and the flow rate Q_{f} of the liquid food 102 is controlled to be 495 liters/hour. The control of the liquid food 102 flowrate Q_{f} is performed by conventional techniques.

The flowrate Qₘ of the heating media 114 is then subjected to variation. In this example such a variation is in three steps: 25 m³/h (cubic meters per hour), decreasing to 12,5 m³/h after 10 minutes and decreasing to 6,25 m³/h at 20 minutes as illustrated in **Fig. 2a****.** To ensure that the temperature T1_{f} of the liquid food product 102 remains the same when it leaves the heat exchanger 106, the temperature T1ₘ of the heating media 114 into the heat exchanger 106 is increased each time the flowrate Qₘ of the heating media 114 is decreased. Exactly how much the heating media temperature T1ₘ shall increase for each instance of media flowrate decrease can be empirically determined, or can be determined by conventional simulation techniques.

As can be seen in **Fig. 2b****,** the temperature T1_{f} of the liquid food 102 output from the heat exchanger 106 and input to the holding cell 108 is kept constant at 140°C, whereas it is found that the liquid food 102 temperature inside (e.g. in the middle of) the heat exchanger 106 drops in correspondence with the decreasing flow rate values of the heating media 114 at 10 minutes and at 20 minutes. This indicates that a higher heating media flowrate Qₘ rate at a lower heating media temperature T1ₘ heats the liquid food 102 faster than when using a relatively lower heating media flowrate Qₘ at a higher heating media temperature T1ₘ. In the former case the liquid food is subjected to a higher degree of heat treatment.

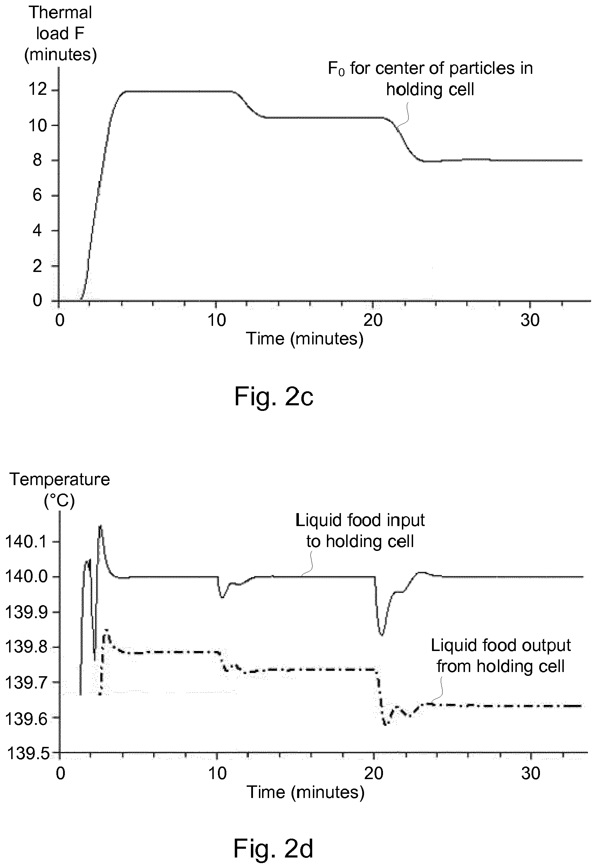

Thus the particles 103, or more specifically the centers of the particles 103, in the liquid food 102 is subjected to a lower degree of heat treatment when the heating media flow rate Qₘ decreases. This is illustrated in the **Fig. 2c** graph of the thermal load value at the particle's 103 center generated in the holding cell 108. The thermal load value drops in three steps: from F₀=12 minutes to F₀=10 minutes at a point in time that corresponds to the point in time at which the media flowrate Qₘ decreases at 10 minutes, and from F₀=10 minutes to F₀=8 minutes at a point in time that correspond to the point in time at which the media flowrate Qₘ decreases at 20 minutes. A small delay in the changes of F₀ in relation to the points in time when the media flowrate Qₘ decrease can be seen in figure 2c. These delays are due to the transport time for the liquid food comprising the particles 103 through the holding cell 108.

As a direct measurable proof of the drop of heat treatment of the center of the particles (as Fig. 2c illustrates), the temperature drop of the liquid food 102 during its propagation through the holding cell 108 can be determined. In **Fig. 2d** both the temperature T1_{f} of the liquid food 102 at the inlet and the temperature T2_{f} of the liquid food 102 at the outlet of the holding cell 108 are shown. As can be seen, the temperature drops in three steps, as a result of the three changes of the flow rate Qₘ of the heating media 114 in the heat exchanger 106. What Fig. 2d illustrates is that the particles 103 enter the holding cell 108 at a lower temperature, as a consequence of the drop in flow rate Qₘ of the heating media, and that the particles 103 pick up heat from the liquid component of the liquid food 102 during its flow through the holding cell 108. Even though the temperature differences are small in Fig. 2d for the different heating media flow rates Qₘ, it can be concluded that the heating media flow rate Qₘ is highly relevant when it comes to heat treating the centers of the particles 103, as shown by Fig. 2c.

To take the heat treating effect of the heating media flow rate Qₘ into account, the system 100 is operable to monitor the flowrate Qₘ of the heating media 114, and further operable to discontinue the transfer of liquid food 102 if the flowrate Qₘ of the heating media 114 is below a predetermined flowrate value Q_{m,ref}.

This operability of the system 100 described above is realized by means of the control unit 150. The control unit 150 comprises a processor 152, memory 154 and input/output circuitry 156 that may operate in conjunction with each other following software instructions stored in the memory 154. As illustrated, the predetermined heating media flowrate value Q_{m,ref} may also be stored in the memory 154.

The control unit 150 is connected to the media flow control device 112, which may comprise a valve that is configured to open and close in response to signals 161 from the control unit 150, to thereby control the heating media flowrate Qₘ. Alternatively, the heating media flowrate Qₘ is controlled by a conventional pump that may be part of the media flow control device 112, which in turn is controlled by the control unit 150. The media flow control device 112 may further comprise flow sensing circuitry that is configured to provide, into the signal 161, information that is representative of the heating media flowrate Qₘ. In principle, the media flow control device 112 is a conventional media flow control device.

The system 100 may be operable such that the predetermined flowrate value Q_{m,ref} is determined by the amount of heat needed to obtain heat treatment of the liquid food 102.

The system 100 may be operable such that the predetermined flowrate value Q_{m,ref} is determined by the amount of heat needed to obtain heat treatment of the particles 103 in the liquid food 102. The system 100 may also be operable such that the predetermined flowrate value Q_{m,ref} is determined by the amount of heat needed to obtain heat treatment of the center of the particles 103 in the liquid food 102. That proper heat treatment is obtained for the particles and their centers may be verified by taking particle samples and by performing microbiological tests on the samples.

The system may be operable such that the amount of heat needed to obtain heat treatment is set such that the liquid food 102 is subjected to a thermal load F₀ that accomplishes killing of *Clostridium botulinum* spores. The system 100 may also be operable such that the amount of heat needed to obtain heat treatment is set such that the center of the particles 103 are subjected to a thermal load F₀ that accomplishes killing of *Clostridium botulinum* spores.

The system 100 may be operable to perform heat treatment where the particles 103 have properties comprising a specific heat capacity of 1800 to 4300 Joule per kilogram and Kelvin, J kg⁻¹ K⁻¹, a heat conductivity of 0.2 to 0.7 Watt per meter and Kelvin, W m⁻¹ K⁻¹ and a density of 850 to 1500 kilogram per cubic meter, kg m⁻³.

It is to be noted that specific and absolute values of the predetermined flowrate value Q_{m,ref} that depends on the amount of heat needed, as described above, may be determined based on, for example, the type of liquid food 102, type of particles 103, the flowrate Q_{f} of the liquid food 102. Typically, Q_{m,ref} is determined either empirically or by conventional simulation techniques.

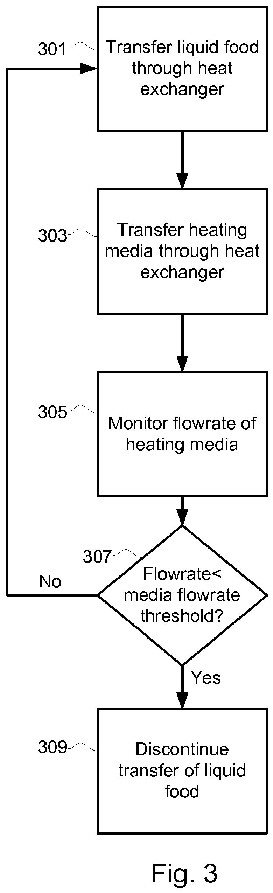

Turning now to **Fig. 3****,** and with continued reference to Fig. 1, a method for heat treating liquid food 102 comprising particles 103 will be described in terms of a number of actions. The actions may be performed by software instructions stored in the memory 154 in the control unit 150.

The liquid food 102 is transferred 301 through the heat exchanger 106 and through the holding cell 108.

A heating media 114 is transferred 303 through the heat exchanger 106, such that heat is passed from the heating media 114 to the liquid food 102, for heat treating the liquid food 102.

A flowrate Qₘ of the heating media 114 is monitored 305.

If it is determined 307 that the flowrate Qₘ of the heating media 114 is below a predetermined flowrate value Q_{m,ref} then the transfer of liquid food 102 is discontinued 309.

The method may implement any of the features and embodiments of the system 100 for heat treating liquid food 102 comprising food particles 103 is illustrated.

From the description above follows that, although various embodiments of the invention have been described and shown, the invention is not restricted thereto, but may also be embodied in other ways within the scope of the subject-matter defined in the following claims.

## Claims

1. A method for heat treating liquid food (102), the liquid food (102) comprising particles (103), the method comprising:
- transferring (301) the liquid food (102) through a heat exchanger (106) and through a holding cell (108),
- transferring (303) a heating media (114) through the heat exchanger (106), such that heat is passed from the heating media (114) to the liquid food (102), for heat treating the liquid food (102),
- monitoring (305) a flowrate (Qₘ) of the heating media (114), and
- discontinuing (309) the transfer of liquid food (102) if (307) the flowrate (Qₘ) of the heating media (114) is below a predetermined flowrate value (Q_{m,ref}).

2. The method of claim 1, wherein the predetermined flowrate value (Q_{m,ref}) is determined by the amount of heat needed to obtain heat treatment of the liquid food (102).

3. The method of claim 1 or 2, wherein the predetermined flowrate value (Q_{m,ref}) is determined by the amount of heat needed to obtain heat treatment of the particles (103) in the liquid food (102).

4. The method of claim 3, wherein the predetermined flowrate value (Q_{m,ref}) is determined by the amount of heat needed to obtain heat treating of the center of the particles (103) in the liquid food (102).

5. The method of any of claims 2 to 4, wherein the amount of heat needed to obtain heat treating is set such that the liquid food (102) is subjected to a thermal load F₀ that accomplishes killing of *Clostridium botulinum* spores.

6. The method of claim 5, wherein the amount of heat needed to obtain heat treating is set such that the center of the particles (103) are subjected to a thermal load F₀ that accomplishes killing of *Clostridium botulinum* spores.

7. The method of any of claims 1 to 6, wherein the particles (103) have properties comprising:
- a specific heat capacity of 1800 to 4300 Joule per kilogram and Kelvin, J kg⁻¹ K⁻¹,
- a heat conductivity of 0.2 to 0.7 Watt per meter and Kelvin, W m⁻¹ K⁻¹, and
- a density of 850 to 1500 kilogram per cubic meter, kg m⁻³.

8. A system (100) for heat treating liquid food (102), the liquid food comprising particles (103), the system (100) comprising a heat exchanger (106), a holding cell (108) and a control unit (150), the system (100) being operable to:
- transfer the liquid food (102) through the heat exchanger (106) and through the holding cell (108),
- transfer a heating media (114) through the heat exchanger (106), for allowing heat to pass from the heating media (114) to the liquid food (102), for heat treating the liquid food (102),
- monitor a flowrate (Qₘ) of the heating media (114), and
- discontinue the transfer of liquid food (102) if the flowrate (Qₘ) of the heating media (114) is below a predetermined flowrate value (Q_{m,ref}).

9. The system (100) of claim 8, operable such that the predetermined flowrate value (Q_{m,ref}) is determined by the amount of heat needed to obtain heat treating of the liquid food (102).

10. The system (100) of claim 8 or 9, operable such that the predetermined flowrate value (Q_{m,ref}) is determined by the amount of heat needed to obtain heat treating of the particles (103) in the liquid food (102).

11. The system of claim 10, operable such that the predetermined flowrate value (Q_{m,ref}) is determined by the amount of heat needed to obtain heat treating of the center of the particles (103) in the liquid food (102).

12. The system (100) of any of claims 9 to 11, operable such that the amount of heat needed to obtain heat treating is set such that the liquid food (102) is subjected to a thermal load F₀ that accomplishes killing of *Clostridium botulinum* spores.

13. The system (100) of claim 12, operable such that the amount of heat needed to obtain heat treating is set such that the center of the particles (103) are subjected to a thermal load F₀ that accomplishes killing of *Clostridium botulinum spores.*

14. The system (100) of any of claims 8 to 13, operable such that the particles (103) have properties comprising:
- a specific heat capacity of 1800 to 4300 Joule per kilogram and Kelvin, J kg⁻¹ K⁻¹, ,
- a heat conductivity of 0.2 to 0.7 Watt per meter and Kelvin, W m⁻¹ K-¹, and
- a density of 850 to 1500 kilogram per cubic meter, kg m⁻³.
